(19) Europäisches Patentamt

European Patent Office

Office européen des brevets

(11) **EP 1 017 185 B1**

(12) **FASCICULE DE BREVET EUROPEEN**

(45) Date de publication et mention
de la délivrance du brevet:
**23.07.2003   Bulletin 2003/30**

(51) Int Cl.⁷: **H04B 7/005**

(21) Numéro de dépôt: **99403063.3**

(22) Date de dépôt: **06.12.1999**

(54) **Procédé de commande de la puissance de transmission**

Verfahren zur Sendeleistungsregelung

Transmission power control method

(84) Etats contractants désignés:
**DE ES FR GB IT**

(30) Priorité:  **30.12.1998  FR 9816703**

(43) Date de publication de la demande:
**05.07.2000   Bulletin 2000/27**

(73) Titulaire: **Mitsubishi Electric Information Technology Centre Europe B.V.
1119 NS Schiphol Rijk (NL)**

(72) Inventeur: **Motier, David
35700 Rennes (FR)**

(74) Mandataire: **Maillet, Alain
SCP Le Guen & Maillet,
5, Place Newquay,
B.P. 70250
35802 Dinard Cedex (FR)**

(56) Documents cités:
**WO-A-94/06217          WO-A-94/06218
US-A- 5 574 747          US-A- 5 655 220**

**Description**

La présente invention concerne un procédé de contrôle de la puissance reçue d'un émetteur par un récepteur d'un système de télécommunications. Par exemple, le système de télécommunications est un réseau sans fil constitué d'une pluralité de stations de base prévues pour communiquer, par voie hertzienne, avec des appareils mobiles encore appelés, dans la suite de la description, mobiles. La présente invention trouve une application particulière dans le cas de la liaison descendante d'un tel réseau de télécommunications pour contrôler la puissance reçue par un mobile en intervenant sur la puissance émise par la station de base avec laquelle il est en communication.

La présente invention concerne également un système de contrôle de puissance prévu pour mettre en oeuvre ce procédé de contrôle. Elle concerne encore un émetteur spécialement adapté pour la mise en oeuvre de ce procédé.

Les procédés de contrôle de puissance en boucle sont connus et sont utilisés pour améliorer les performances des systèmes de télécommunications, que ce soit en liaison montante ou en liaison descendante. Ils consistent essentiellement à ajuster la puissance du signal émis par l'émetteur à partir d'une information de commande engendrée par le récepteur, l'émetteur pouvant être une station de base ou un mobile et le récepteur pouvant alors être respectivement le mobile ou la station de base. L'information de commande émise par le récepteur est telle que le signal reçu par le récepteur soit à un niveau de puissance indépendant des perturbations générées par le canal de transmission entre l'émetteur et le récepteur, par exemple des évanouissements variables dans le temps. Ces procédés permettent en outre de minimiser la consommation de puissance des émetteurs et de limiter les interférences entre utilisateurs.

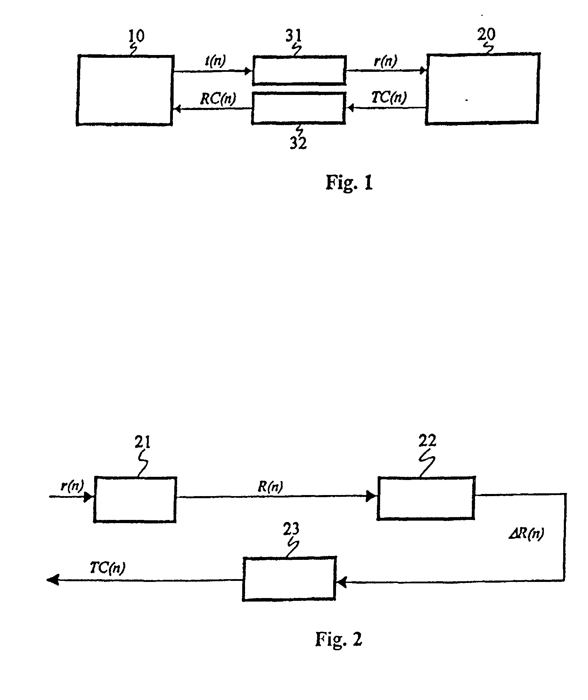

De manière générale, un système de télécommunications tel que celui qui est visible à la Fig. 1 est généralement constitué d'un émetteur 10 qui émet des signaux à destination d'un récepteur 20 et, ce, via un canal aller 31. Des informations de contrôle sont également transmises du récepteur 20 à l'émetteur 10 et, ce, via un canal retour 32.

On comprendra qu'un procédé de contrôle de puissance consiste donc à contrôler la puissance d'émission de l'émetteur 10 de manière que la puissance reçue par le récepteur 20 soit à un niveau désiré optimum.

A la Fig. 1, l'émetteur 10, dans une fenêtre de temps d'indice $n$, émet un signal dont la puissance d'émission est notée $t(n)$. Dans le canal aller 31, ce signal subit une atténuation de puissance $c(n)$ qui varie avec le temps. Le récepteur 20 reçoit ainsi un signal dont la puissance $r(n)$ est donnée par le produit de la puissance émise par l'émetteur 10 par l'atténuation du canal aller, soit par la relation suivante :

$$r(n) = t(n) \cdot c(n)$$

Dans la suite de la description, on utilisera des majuscules pour désigner des grandeurs de puissance exprimées en décibels. Ainsi, la relation précédente peut s'écrire :

$$R(n) = T(n) + C(n)$$

Le récepteur 20, sur la base de la puissance du signal reçu $R(n)$, élabore un signal $TC(n)$ qui est représentatif du résultat de la comparaison entre la puissance reçue $R(n)$ et une puissance requise et qui est alors transmis, via le canal retour 32, à l'émetteur 10.

Ce signal $TC(n)$ sera nommé, dans la suite de la description, signal de différence.

Pour simplifier, on considérera que le canal retour 32 induit la totalité x des retards de réaction entre le moment où le signal émis par l'émetteur 10 est reçu par le récepteur 20 et le moment où le signal de différence $RC(n)$ est reçu par l'émetteur 10. Le retard x totalise ainsi les temps de calculs, les temps de propagations, le délai de synchronisation, etc. On considérera encore que les erreurs de ce canal retour 32 se concrétisent sous la forme d'une séquence d'erreurs $e(n)$. Ainsi, le signal de différence reçu par l'émetteur 10 $RC(n)$ peut s'écrire de la manière suivante en fonction du signal de différence émis par le récepteur 20 :

$$RC(n) = TC(n-x) + e(n)$$

Pour que le récepteur 20 fonctionne correctement, la puissance $R(n)$ doit être la plus proche possible d'une puissance requise $Rreq$.

Actuellement, le signal de différence $TC(n)$, généralement à valeur discrète, correspond au nombre de décibels selon lequel le récepteur 20 a estimé qu'il fallait augmenter ou diminuer la puissance $t(n)$ émise par l'émetteur 10 pour que la puissance $R(n)$ que le récepteur 20 reçoit soit la plus proche possible de la puissance requise $Rreq$.

On notera que le signal $TC(n)$ peut résulter d'une simple comparaison de l'écart de puissance constaté en réception qui est alors quantifié sur Q bits (Q pouvant être égal à un). Il peut également résulter d'une technique de prédiction qui intègre le retard de prise en compte de la commande de contrôle de puissance par l'émetteur 10.

Ainsi, dans tous les cas proposés actuellement, c'est dans le récepteur 20 qu'est implémenté le procédé pour générer le signal de commande de contrôle de puissance *TC(n)*.

Dans le cas d'une liaison descendante entre une station de base et un mobile d'un réseau téléphonique sans fil, l'émetteur 10 et le récepteur 20 sont respectivement la station de base et le mobile. Dans le cas d'une liaison montante, l'émetteur 10 et le récepteur 20 sont respectivement le mobile et la station de base.

Dans un réseau de télécommunications sans fil, la station de base doit notamment gérer le niveau des interférences, maîtriser sa propre consommation de puissance et assurer une qualité de transmission. De plus, il est souhaitable que le procédé de contrôle puisse se faire indépendamment de la technologie utilisée dans chaque type de mobile. Pour ce faire, il doit être implémenté dans la station de base. Or, l'application des procédés de l'état de la technique ne permet pas une telle implémentation dans le cas des liaisons descendantes où la station de base joue le rôle de l'émetteur 10 et le mobile le rôle du récepteur 20.

Pour que la station de base puisse maîtriser le contrôle de puissance en liaison descendante, une solution consisterait à standardiser cette fonction dans le mobile si bien que tous les mobiles, quelle que soit leur origine, la mettraient en oeuvre. L'inconvénient qui résulterait de cette solution est qu'aucune amélioration de la technique utilisée ne serait envisageable sans une nouvelle standardisation.

Le but de la présente invention est de proposer un procédé de contrôle de puissance qui permette le contrôle de la puissance reçue par un mobile et émise par une station de base, ledit procédé étant implémenté dans ladite station de base.

A cet effet, un procédé de contrôle de la puissance reçue par un récepteur et transmise d'un émetteur d'un système de télécommunications consiste à établir un signal représentatif de la différence entre la puissance reçue par ledit récepteur et une puissance requise, et à commander, sur la base du signal de différence, la puissance émise par ledit émetteur. Il est caractérisé en ce qu'il consiste en outre à établir ledit signal de différence côté récepteur et à le transmettre audit émetteur, et à engendrer un signal représentatif d'un changement de ladite puissance émise par ledit émetteur sur la base dudit signal de différence reçu du récepteur par ledit émetteur et sur la base d'au moins un autre signal établi dans l'émetteur et à intégrer ledit signal de changement de puissance afin de commander ladite puissance émise par ledit récepteur.

Selon une autre caractéristique de l'invention, ledit ou un des autres signaux établis dans l'émetteur est un signal de commande de changement de puissance établi par l'émetteur pour un instant précédant l'instant courant.

Selon une autre caractéristique de l'invention, ledit procédé consiste à effectuer un écrêtage pour limiter l'excursion dudit signal de commande de changement de puissance entre deux valeurs particulières.

Selon une autre caractéristique de l'invention, ledit procédé consiste à évaluer, d'une part, sur la base du signal de différence reçu dudit récepteur, l'écart statique entre la puissance reçue par ledit récepteur et une puissance requise, et, d'autre part, sur la base du signal de différence reçu dudit récepteur et sur la base du signal de commande de changement de puissance établi précédemment, un écart dynamique puis à effectuer une sommation pondérée dudit écart statique et dudit écart dynamique afin d'engendrer ledit signal de commande de changement de puissance courant.

Avantageusement, au moins l'un desdits coefficients de pondération de la sommation pondérée sont prédéterminés ou déterminés selon les conditions de la transmission entre l'émetteur et le récepteur.

Avantageusement encore, au moins l'un desdits coefficients de pondération de la sommation pondérée sont déterminés en fonction de la vitesse du mobile par rapport à la station fixe.

Selon une autre caractéristique de l'invention, ledit procédé consiste à évaluer un écart dynamique dû au canal aller entre l'émetteur et le récepteur et à évaluer un écart dynamique dû aux transmissions précédentes.

La présente invention concerne également un système de contrôle de puissance prévu pour mettre en oeuvre le procédé dont les caractéristiques sont données ci-dessus. Elle concerne encore un émetteur pour cette mise en oeuvre.

Par ailleurs, les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Fig. 1 est un schéma synoptique d'un système de télécommunications auquel le procédé de l'invention peut être appliqué,

la Fig. 2 est un schéma synoptique d'un récepteur d'un système de télécommunications auquel le procédé de l'invention peut être appliqué,

les Figs. 3a et 3b sont des schémas synoptiques d'émetteurs d'un système de télécommunications auquel le procédé de l'invention peut être appliqué respectivement selon un premier et un second modes de réalisation de l'invention, et

la Fig. 4 est un schéma synoptique d'un mode de réalisation particulier d'une unité de traitement comprise dans un émetteur selon l'invention.

Dans la suite de la description, on sera amené à utiliser la transformée en *z*. On rappelle que la transformée en *z* d'un signal prenant respectivement pendant des fenêtres de temps {*0, 1, ..., n, ...* } les valeurs {*f(0)*, *f(1)*, ..., *f(n)*, ...} est la fonction suivante du nombre complexe *z* :

$$F(z) = f(0) + \frac{f(1)}{z} + ... + \frac{f(n)}{z^n} + ...$$

On rappelle que la fonction retard de *x* fenêtres de temps a pour transformée en *z* la fonction $l/z^x = z^{-x}$.

La présente invention est appliquée à un système de télécommunications du type de celui qui est représenté à la Fig. 1. Ce système comporte donc un émetteur 10, un canal aller 31, un canal retour 32 et un récepteur 20. Par exemple, l'émetteur 10 considéré est logé dans une station de base d'un réseau de télécommunications sans fil et le récepteur 20 est logé dans un mobile.

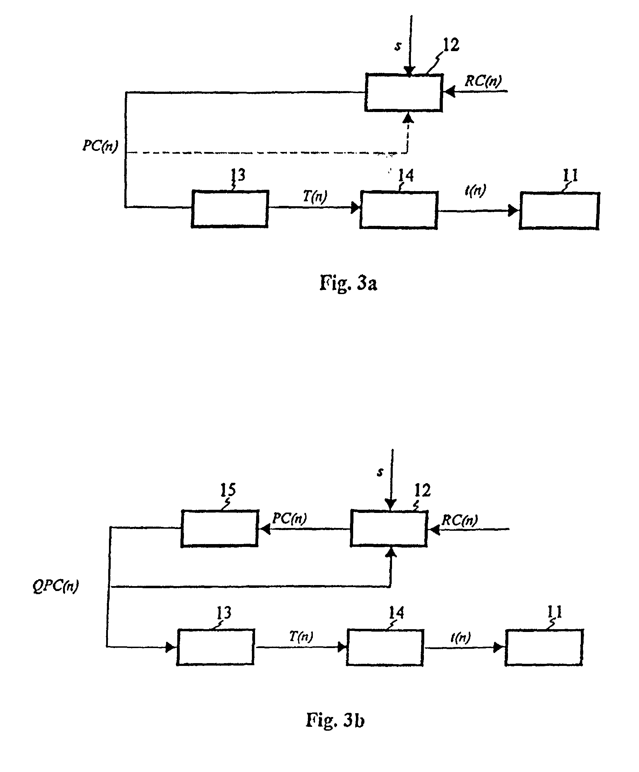

On a représenté à la Fig. 2 un mode de réalisation d'un récepteur 20 en ce qui concerne les fonctions mises en oeuvre dans le cadre d'un procédé de contrôle de puissance selon l'invention. Il comporte une unité de conversion 21 assurant la conversion de la mesure de la puissance réelle reçue *r(n)* en une valeur de puissance reçue exprimée en décibels *R(n)*. Il comporte une unité 22 de détermination de l'écart de puissance $\Delta R(n)$ qui est la différence entre la valeur de puissance reçue exprimée en décibels *R(n)* et une valeur de puissance cible $R_{cible}$ :

$$\Delta R(n) = R(n) - R_{cible}$$

La puissance cible $R_{cible}$ est par exemple soit la puissance requise $R_{req}$, soit la puissance requise à laquelle on ajoute une marge d'erreurs $\Delta M$ du système de contrôle de puissance. On a alors :

$$R_{cible} = R_{req} + \Delta M$$

Le récepteur 20 comporte encore une unité de quantification 23 destinée à quantifier la valeur de l'écart de puissance $\Delta R(n)$ et à délivrer un signal de différence *TC(n)* quantifié sur un certain nombre de bits Q. Par exemple, un seul bit de quantification (Q = 1) est utilisé, la fonction de l'unité de quantification 23 pouvant alors s'écrire :

$$\text{si } \Delta R(n) > 0, \ TC(n) = +y \text{ dB}$$

$$\text{si } \Delta R(n) < 0, \ TC(n) = -y \text{ dB}$$

où *y* est un niveau de puissance donné.

On notera que si la quantification opérée par l'unité 23 est effectuée sur un seul bit, il n'est plus nécessaire de prévoir l'unité de conversion 21 du récepteur 20. Ainsi, par la mise en oeuvre de l'invention et dans ce cas d'une quantification sur un seul bit, le récepteur 20 est simplifié.

On a représenté à la Fig. 3a un premier mode de réalisation d'un émetteur 10 en ce qui concerne les fonctions mises en oeuvre dans le cadre d'un procédé de contrôle de puissance selon l'invention.

Il comporte une unité de commande 11 prévue pour commander la puissance émise par l'émetteur 10. On rappelle que cette puissance, conformément à la Fig. 1, est notée *t(n)*. Cette unité de commande 11 a une entrée de commande sur laquelle est appliqué un signal de commande de puissance que l'on a également noté, par souci de simplification, *t(n)*.

L'émetteur 10 comporte encore une unité de traitement 12 qui met en oeuvre un algorithme de contrôle de puissance en boucle fermée et qui délivre ainsi un signal de commande de changement de puissance *PC(n)* en fonction, notamment, du signal de différence *RC(n)* reçu du récepteur 20, mais aussi d'au moins un autre signal s représentatif d'une information qui est connue avec précision de l'émetteur 10.

On rappelle que la variable n représente une fenêtre de temps, généralement dans la présente description sauf avis contraire, la fenêtre de temps courante.

Cet autre signal peut, dans certains modes de mise en oeuvre, être le signal de commande de changement de puissance *PC(n)* pendant une ou plusieurs fenêtres précédentes. Pour ce faire, l'unité 12 peut comporter une entrée sur laquelle est fourni le signal de commande de changement de puissance *PC(n)* (trait en pointillés de la Fig. 3a).

Dans le mode de mise en oeuvre représenté à la Fig. 3a, l'émetteur 10 comporte encore une unité d'intégration 13 assurant la mise à jour du signal de commande de puissance d'émission *T(n)* en décibels, en intégrant le signal de commande de changement de puissance *PC(n)*. Le signal de commande de puissance émise *T(n)* pendant la fenêtre de temps d'indice *n* tient compte du signal de commande de la puissance émise *T(n-1)* pendant la fenêtre de temps précédente *n-1* et de la commande de changement de puissance *PC(n)*. La fonction de mise à jour de l'unité 13 s'écrit donc sous la forme :

$$T(n) = T(n-1) + PC(n)$$

En utilisant la transformée en *z*, cette relation devient :

$$T(n) = f(z) . PC(n), \text{ où } f(z) = I/(1-z^{-1})$$

L'émetteur 10 comprend encore une unité de conversion 14 prévue pour assurer la conversion du signal de commande de puissance *T(n)* délivrée par l'unité 13 exprimée en décibels en un signal de commande de puissance exprimée en puissance réelle *t(n)*.

Contrairement aux méthodes de l'état de la technique selon lesquelles le signal de commande de changement de puissance *PC(n)* est calculé dans et transmis par le récepteur 20 à l'émetteur 10 et qui de ce fait, est quantifiée sur Q bits, le signal de commande de changement de puissance *PC(n)* générée par l'unité 12 de l'émetteur 10 peut être exprimée en grandeurs non-quantifiées ce qui assure alors une plus grande précision à l'algorithme mis en oeuvre par l'unité 12.

Selon un autre mode de réalisation préféré représenté à la Fig. 3b, l'émetteur 10 comprend, en plus des unités 11, 12, 13 et 14, une unité d'écrêtage 15 dont la fonction est de tronquer le signal de commande de changement de puissance *PC(n)* au cas où son amplitude prendrait des valeurs en dehors d'un intervalle [*a*,*b*] de valeurs prédéterminées. Ainsi, l'unité 15 limite l'excursion du signal de commande de changement de puissance *PC(n)* entre les deux valeurs *a* et *b*. Cette unité 15 évite à l'algorithme de diverger lorsque les perturbations sur la transmission ont fortement dégradé la fiabilité de l'information *RC(n)*.

La valeur *QPC(n)* de sortie de l'unité 15 est donc telle que :

$$a<=QPC(n)<=b$$

Les valeurs *a* et *b* peuvent être fixées (Typiquement, *a*=-3 dB, *b*=+3 dB) mais peuvent aussi être choisies en fonction des conditions de transmission.

A l'instar du mode de mise en oeuvre représenté à la Fig. 3a, le signal de commande de la puissance émise *T(n)* pendant la fenêtre de temps d'indice *n* tient compte du signal de commande de la puissance émise *T(n-1)* pendant la fenêtre de temps précédente *n-1* et du signal de commande de changement de puissance *QPC(n)*. La fonction de mise à jour de l'unité 12 s'écrit donc sous la forme :

$$T(n) = T(n-1) + QPC(n)$$

En utilisant la transformée en *z*, cette relation devient :

$$T(n) = f(z) . QPC(n), \text{ où } f(z) = 1/(1-z^{-1})$$

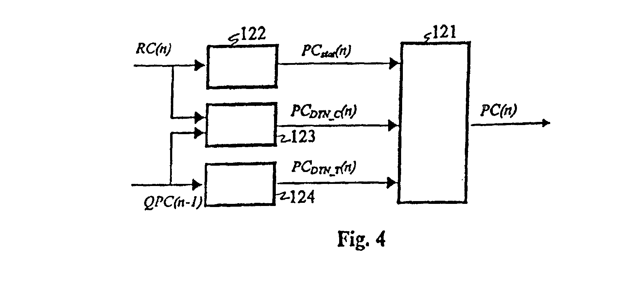

On propose ci-après un mode préférentiel de réalisation de l'unité de traitement 12 dont la structure est représentée à la Fig. 4.

L'unité de traitement 12 représentée à la Fig. 4 comprend une unité de sommation pondérée 121 qui reçoit sur ses trois entrées respectives un signal représentatif de l'écart statique $PC_{stat}(n)$, un signal représentatif de l'écart dynamique dû au canal aller $PC_{DYN-C}(n)$ et un signal représentatif de l'écart dynamique dû à la transmission $PC_{DYN-T}(n)$ et qui délivre le signal de commande de changement de puissance *PC(n)*.

L'écart statique $PC_{stat}(n)$ est la différence entre, d'une part, la puissance *R(n-x)* reçue par le récepteur 20 pendant la fenêtre de temps précédant *x* fois la fenêtre courante *n* et, d'autre part, la puissance cible $R_{cible}$. Par exemple, il peut être provoqué par les variations de puissance dues au canal aller 31 dans le passé.

Quant à l'écart dynamique, il correspond à la prévision par l'émetteur 10 de l'écart de puissance qu'est susceptible d'observer le récepteur 20 dans le futur, à un instant $t$ correspondant à la prise en compte du signal de différence reçue $RC(t)$. Le récepteur 20 peut en effet s'attendre à deux types de variations dynamiques de puissance : l'une, que l'on a notée $PC_{DYN\_C}(n)$, a pour origine les variations de puissance dues au canal aller 31 et l'autre, que l'on a notée $PC_{DYN\_T}(n)$, a pour origine les variations de puissance émise par l'émetteur 10 dues aux commandes successives de contrôle de puissance passées.

On notera que ces dernières sont précisément connues contrairement aux systèmes de l'art antérieur pour lesquels la génération du signal de commande de changement de puissance était implémentée dans le récepteur 20 et pour lesquels les variations de puissance de transmission n'étaient seulement connues qu'aux erreurs de transmission près sur le canal retour 32.

L'unité 121 effectue une somme pondérée de l'écart statique et des écarts dynamiques. Elle effectue donc le calcul donné par la relation suivante :

$$PC(n) = \alpha \cdot PC_{STAT}(n) + \beta \cdot PC_{DYN\_C}(n) + \gamma \cdot PC_{DYN\_T}(n)$$

Les coefficients de pondération $\alpha, \beta, \gamma$ sont, soit prédéterminés, soit au moins l'un déterminé selon diverses conditions, par exemple des conditions de transmission. Par exemple, un desdits coefficients est déterminé en fonction de la vitesse du mobile qui serait alors mesurée ou évaluée, par exemple selon des méthodes connues ou autres.

Pour déterminer l'écart statique $PC_{STAT}(n)$, l'unité de calcul 12 comprend une unité 122 qui reçoit sur son entrée le signal de puissance reçue $RC(n)$.

Dans un mode de réalisation préférentiel, le signal d'écart statique $PC_{STAT}(n)$ délivré par l'unité 122 est égal au signal de différence reçue $RC(n)$.

En effet, l'écart statique $PC_{STAT}(n)$ pendant la fenêtre de temps n est la différence entre le signal de puissance cible $R_{cible}$, qui est constant avec le temps, et le signal de puissance reçue $R(n-x)$ par le récepteur 20 pendant la fenêtre de temps x fois précédente. On rappelle que x est la somme des retards entre le moment où le signal de puissance $t$ (n) émis par l'émetteur 10 est reçu par le récepteur 20 et le moment où le signal de différence $RC(n)$ est reçu par l'émetteur 10. On a donc la relation suivante :

$$PC_{STAT}(n) = R_{cible} - R(n-x) = -\Delta R(n-x)$$

On rappelle que le signal de différence $TC(n)$ émis par le récepteur 20 est la différence entre la puissance reçue $R(n)$ et la puissance cible $R_{cible}$. On peut donc écrire la relation suivante :

$$PC_{STAT}(n) = -\Delta R(n-x) = -TC(n-x)$$

Or, le signal de différence $RC(n)$ reçu par l'émetteur 10 pendant la fenêtre de temps $n$ est, aux erreurs près introduites notamment par le canal retour 32, le signal de commande $TC(n-x)$ émis pendant la fenêtre de temps x fois précédente. On a donc la relation suivante :

$$PC_{STAT}(n) \approx -RC(n)$$

Pour déterminer l'écart dynamique dû au canal aller 31, l'unité de calcul 12 comprend une unité 123 qui reçoit sur ses deux entrées respectives, d'une part, le signal de différence reçue $RC(n)$ et, d'autre part, le signal de commande de changement de puissance $QPC(n-1)$ (ou $PC(n-1)$ dans le cas d'un émetteur 10 selon la Fig. 3a) au moment de la fenêtre précédente et qui délivre le signal représentatif de l'écart dynamique dû au canal $PC_{DYN-C}(n)$.

L'évaluation de l'écart de puissance dynamique $PC_{DYN\_C(n)}$ dû au canal repose sur une prédiction de la variation de la réponse du canal aller 31 $\Delta C'(n)$ entre l'instant de la fenêtre courante $n$ correspondant à l'émission par le récepteur 20 du signal de différence $TC(n)$ et l'instant $n+x$ de la fenêtre $x$ fois suivante correspondant à la prise en compte du signal de différence $RC(n)$ reçu par l'émetteur 10 pour générer le signal de commande de changement de puissance $QPC(n)$ ou $PC(n)$. La commande $PC_{DYN\_C}(n)$ permettant de compenser cet écart est égale à l'opposé de la variation de la réponse du canal, soit :

$$PC_{DYN\_C}(n) = - \Delta C'(n) = - [C'(n)-C(n-x)]$$

où $C'(n)$ est une estimation de $C(n)$.

Une solution possible pour estimer la variation de réponse du canal $\Delta C'(n)$ est d'utiliser les estimations $C'(n-x)$, $C'(n-x-1)$ et $C'(n-x-2)$ de l'atténuation de puissance apportée par le canal aller 31 pendant les fenêtres de temps précédentes. On peut donc écrire :

$$\Delta C'(n) = g_x(z) \, C'(n-x)$$

où $g_x(z)$ est la réponse d'un filtre prédictif correspondant à un rang futur $x$.

Les estimations $C'(n)$ de $C(n)$ peuvent être obtenues en considérant les relations suivantes :

$$C(n) = R(n) - T(n) = [R(n)-R_{cible}] - T(n) +R_{cible}$$

et :

$$C'(n-x) = RC(n) - T(n-x) +R_{cible}$$

Ainsi, on peut écrire :

$$\Delta C'(n) = g_x(z)[RC(n) - T(n-x) + R_{cible}]$$

La réponse $g(z)$ peut être simple, comme par exemple celle d'un filtre polynomial d'ordre 2. Dans ce cas, sa fonction peut s'écrire de la manière suivante :

$$g(z) = (x^2+3x)/2 - (x^2+2x) \, z^{-1} + (x^2+x)z^{-1}/2$$

Dans ces conditions, du fait que la puissance cible $R_{cible}$ peut être considérée comme étant invariante dans le temps, on a :

$$g(z). \, R_{cible} = 0$$

D'où:

$$\Delta C'(n) = g_x(z)[RC(n) - T(n-x)]$$

L'écart de puissance dynamique $PC_{DYN\_C}(n)$ dû au canal est ainsi donné par la relation suivante :

$$PC_{DYN\_C}(n) = - g_x(z) \, [RC(n) - f(z) \, . \, QPC(n-x)]$$

Pour l'évaluation de l'écart dynamique dû aux transmissions précédentes, l'unité de calcul 12 comporte une unité 124 qui reçoit sur son entrée le signal de commande de changement de puissance $QPC(n-1)$ (ou $PC(n-1)$ dans le cas où l'émetteur 10 est conforme à celui représenté à la Fig. 1) et qui délivre un signal représentatif de l'écart dynamique $PC_{DYN-T}(n)$.

Le signal d'écart dynamique dû aux transmissions précédentes $PC_{DYN\_T}(n)$ permet de compenser les variations de puissance $\Delta T(n)$ dues aux commandes envoyées par l'émetteur 10 depuis l'instant de l'émission par le récepteur 20 du signal de différence $TC(n)$.

On notera que, contrairement aux systèmes de l'état de la technique par lesquels la génération du signal de commande de changement de puissance est logée dans le récepteur 20 et où ces variations sont connues de l'émetteur 10 aux erreurs de transmission près sur le canal retour 32, ces variations sont connues avec exactitude dans le cas de la présente invention. Le signal d'écart dynamique $PC_{DYN\_T}(n)$ est donc égal à l'opposé de la variation de la puissance transmise, soit :

$$PC_{DYN\_T}(n) = - \{QPC(n-1) + ... + QPC(n-x+1)\}$$

Cette relation peut encore s'écrire en utilisant la notation des fonctions en *z* :

$$PC_{DYN\_T}(n) = -h(z)\ QPC(x-1)$$

avec

$$h(z) = \sum_{j=0}^{x-2} z^{-j} \quad x \geq 2$$

## Revendications

1. Système de contrôle de la puissance reçue d'un émetteur (10) par un récepteur (20) d'un système de télécommunications, ledit système comprenant une unité (22) dans ledit récepteur (20) pour établir un signal ($TC(n)$) représentatif de la différence entre la puissance reçue par ledit récepteur (20) et une puissance requise et pour transmettre ledit signal audit émetteur (10), et une unité (11) pour commander la puissance émise par ledit émetteur (10), **caractérisé en ce que** ledit émetteur (10) comprend une unité de traitement (12) qui, sur la base dudit signal de différence ($RC(n)$) reçu du récepteur (20) et sur la base d'au moins un autre signal établi dans l'émetteur (20), engendre un signal de commande de changement de puissance ($PC(n)$) et une unité d'intégration (13) prévue pour intégrer ledit signal de commande de changement de puissance ($PC(n)$) et pour délivrer un signal de commande de puissance ($T(n), t(n)$) à ladite unité de commande de puissance (11).

2. Système de contrôle selon la revendication 1, **caractérisé en ce que** ledit ou un des autres signaux établis dans l'émetteur (10) est un signal de commande de changement de puissance ($PC(n-1)$) établi par l'unité de traitement (12) pour un instant précédant l'instant courant.

3. Système de contrôle selon la revendication 1 ou 2, **caractérisé en ce que** ledit émetteur (10) comporte une unité d'écrêtage (15) prévue pour limiter l'excursion dudit signal de commande de changement de puissance ($PC(n)$) entre deux valeurs particulières et ainsi former un signal de commande de changement de puissance écrêté ($QPC(n)$) délivré à l'unité d'intégration (13).

4. Système de contrôle selon une des revendications précédentes, **caractérisé en ce qu'**il comporte une unité de conversion (14) prévue pour assurer la conversion du signal de commande de puissance ($TC(n)$) exprimé en décibels en un signal de commande de puissance ($t(n)$) exprimé en valeurs réelles.

5. Système de contrôle selon une des revendications précédentes, **caractérisé en ce que** ladite unité de traitement (12) est constituée d'une unité (122) prévue pour évaluer, sur la base du signal de différence ($RC(n)$) reçu dudit récepteur (20), l'écart statique entre la puissance reçue par ledit récepteur et une puissance requise, d'au moins une unité (123, 124) prévue pour évaluer, sur la base du signal de différence ($RC(n)$) reçu dudit récepteur (20) et sur la base du signal de commande de changement de puissance ($PC(n-1)$) établi précédemment par l'unité de traitement (12), un écart dynamique et d'une unité de sommation pondérée (121) prévue pour effectuer une sommation pondérée des signaux d'évaluation délivrés par lesdites unités (122, 123 et 124) et pour délivrer ledit signal de commande de changement de puissance ($PC(n)$) courant.

6. Système de contrôle selon la revendication 5, **caractérisé en ce qu'**au moins l'un desdits coefficients de pondération de la sommation pondérée effectuée par l'unité (121) sont prédéterminés ou déterminés selon les conditions de la transmission entre l'émetteur (10) et le récepteur (20).

7. Système de contrôle selon la revendication 5 ou 6, **caractérisé en ce qu'**au moins l'un desdits coefficients de pondération de la sommation pondérée effectuée par l'unité (121) sont déterminés en fonction de la vitesse du mobile par rapport à la station fixe.

8. Système de contrôle selon une des revendications 5 à 7, **caractérisé en ce que** ladite unité de traitement (12) est constituée d'une unité (123) pour évaluer un écart dynamique dû au canal aller entre l'émetteur (10) et le récepteur (20) et d'une unité (124) pour évaluer un écart dynamique dû aux transmissions précédentes.

9. Système de contrôle selon la revendication 8, **caractérisé en ce que** ladite unité (123) pour évaluer l'écart dynamique dû au canal aller ($PC_{DYN-C}(n)$) effectue, sur la base du signal de différence ($RC(n)$) reçu dudit récepteur (20) et sur la base du signal de commande de changement de puissance ($PC(n-1)$) établi précédemment par l'unité de traitement (12), le calcul donné par la relation suivante :

$$PC_{DYN\_C}(n) = - g_x(z) \, [ \, RC(n) - f(z) \, . \, QPC(n-x)]$$

exprimée selon la notation des transformées en $z$, $g(z)$ étant une fonction en $z$ de filtre prédictif, $f(z)$ une fonction en $z$ égale à $1/1(1-z^{-1})$ et $x$ étant le retard total entre le moment où le signal émis par l'émetteur (10) est reçu par ledit récepteur (20) et le moment où le signal de différence ($RC(n)$) est reçu par l'émetteur (10).

10. Système de contrôle selon la revendication 8 ou 9, **caractérisé en ce que** ladite unité (124) pour évaluer l'écart dynamique dû aux transmissions précédentes ($PC_{DYN-T}(n)$) effectue, sur la base du signal de commande de changement de puissance ($PC(n-1)$) établi précédemment par l'unité de traitement (12), le calcul donné par la relation suivante :

$$PC_{DYN\_T}(n) = -h(z) \, QPC(x-1)$$

où h est une fonction en $z$ telle que

$$h(z) = \sum_{j=0}^{x-2} z^{-j} \quad x \geq 2 \quad .$$

11. Emetteur d'un système de télécommunications du type qui comporte une unité de commande de puissance (11) qui fixe sa puissance d'émission afin de contrôler la puissance reçue de lui par un récepteur (20) avec lequel il communique, ledit émetteur (10) étant apte à recevoir dudit récepteur (20) un signal de différence représentatif normalement de la différence entre la puissance que ledit récepteur (20) a reçu dudit émetteur (10) et une puissance requise, **caractérisé en ce qu'**il comprend une unité de traitement (12) qui, sur la base dudit signal de différence reçu du récepteur (20) et sur la base d'au moins un autre signal établi dans l'émetteur (10), engendre un signal de commande de changement de puissance et une unité d'intégration (13) prévue pour intégrer ledit signal de commande de changement de puissance et pour délivrer un signal de commande de puissance à ladite unité de commande de puissance (11).

12. Emetteur selon la revendication 11, **caractérisé en ce que** ledit ou un des autres signaux établis dans l'émetteur (10) est un signal de commande de changement de puissance ($PC(n-1)$) établi par l'unité de traitement (12) pour un instant précédant l'instant courant.

13. Emetteur selon la revendication 11 ou 12, **caractérisé en ce qu'**il comporte une unité d'écrêtage (15) prévue pour limiter l'excursion dudit signal de commande de changement de puissance ($PC(n)$) entre deux valeurs particulières et ainsi former un signal de commande de changement de puissance écrêté ($QPC(n)$) délivré à l'unité d'intégration (13).

14. Emetteur selon une des revendications 11 à 13, **caractérisé en ce qu'**il comporte une unité de conversion (14) prévue pour assurer la conversion du signal de commande de puissance ($TC(n)$) exprimé en décibels en un signal de commande de puissance ($t(n)$) exprimé en valeurs réelles.

**15.** Emetteur selon une des revendications 11 à 14, **caractérisé en ce que** ladite unité de traitement (12) est constituée d'une unité (122) prévue pour évaluer, sur la base du signal de différence (*RC(n)*) reçu dudit récepteur (20), l'écart statique entre la puissance reçue par ledit récepteur et une puissance requise, d'au moins une unité (123, 124) prévue pour évaluer, sur la base du signal de différence *(RC(n))* reçu dudit récepteur (20) et sur la base du signal de commande de changement de puissance (*PC(n-1)*) établi précédemment par l'unité de traitement (12), un écart dynamique et d'une unité de sommation pondérée (121) prévue pour effectuer une sommation pondérée des signaux d'évaluation délivrés par lesdites unités (122, 123 et 124) et pour délivrer ledit signal de commande de changement de puissance (*PC(n)*) courant.

**16.** Émetteur selon la revendication 15, **caractérisé en ce qu'**au moins l'un desdits coefficients de pondération de la sommation pondérée effectuée par ladite unité (121) sont prédéterminés ou déterminés selon les conditions de la transmission entre l'émetteur (10) et le récepteur (20).

**17.** Emetteur, selon la revendication 15 ou 16, **caractérisé en ce qu'**au moins l'un desdits coefficients de pondération de la sommation pondérée effectuée par l'unité (121) sont déterminés en fonction de la vitesse du mobile par rapport à la station fixe.

**18.** Emetteur selon la revendication 15 à 17, **caractérisé en ce que** ladite unité de traitement (12) est constituée d'une unité (123) pour évaluer un écart dynamique dû au canal aller entre l'émetteur (10) et le récepteur (20) et d'une unité (124) pour évaluer un écart dynamique dû aux transmissions précédentes.

**19.** Emetteur selon la revendication 18, **caractérisé en ce que** ladite unité (123) pour évaluer l'écart dynamique dû au canal aller (*PC$_{DYN-C}$(n)*) effectue, sur la base du signal de différence (*RC(n)*) reçu dudit récepteur (20) et sur la base du signal de commande de changement de puissance (*PC(n-1)*) établi précédemment par l'unité de traitement (12), le calcul donné par la relation suivante :

$$PC_{DYN\_C}(n) = -g_x(z) \, [RC(n) - f(z) \cdot QPC(n-x)]$$

exprimée selon la notation des transformées en *z*, *g(z)* étant une fonction en *z* de filtre prédictif, *f(z)* une fonction en *z* égale à la fonction *$1/1(1-z^{-1})$* et x étant le retard total entre le moment où le signal émis par l'émetteur (10) est reçu par ledit récepteur (20) et le moment où le signal de différence (*RC(n)*) est reçu par l'émetteur (10).

**20.** Emetteur selon la revendication 16 ou 17, **caractérisé en ce que** ladite unité (124) pour évaluer l'écart dynamique dû aux transmissions précédentes (*PC$_{DYN-T}$(n)*) effectue, sur la base du signal de commande de changement de puissance (*PC(n-1)*) établi précédemment par l'unité de traitement (12), le calcul donné par la relation suivante :

$$PC_{DYN\_T}(n) = - h(z) \, QPC(x-1)$$

où h est une fonction en *z* telle que

$$h(z) = \sum_{j=0}^{x-2} z^{-j} \quad x \geq 2 \quad .$$

**21.** Procédé de contrôle de la puissance reçue par un récepteur (20) et transmise d'un émetteur (10) d'un système de télécommunications, ledit procédé consistant à établir un signal représentatif de la différence entre la puissance reçue par ledit récepteur (20) et une puissance requise, et à commander, sur la base du signal de différence, la puissance émise par ledit émetteur (10), **caractérisé en ce qu'**il consiste à établir ledit signal de différence côté récepteur (20) et à le transmettre audit émetteur (10), et à engendrer un signal représentatif d'un changement de ladite puissance émise par ledit émetteur (10) sur la base dudit signal de différence reçu du récepteur (20) par ledit émetteur (10) et sur la base d'au moins un autre signal établi dans l'émetteur (10) et à intégrer ledit signal de changement de puissance afin de commander ladite puissance émise par ledit récepteur (20).

**22.** Procédé de contrôle de la puissance selon la revendication 21, **caractérisé en ce que** ledit ou un des autres signaux établis dans l'émetteur (10) est un signal de commande de changement de puissance (*PC(n-1)*) établi par l'émetteur (10) pour un instant précédant l'instant courant.

**23.** Procédé selon la revendication 21 ou 22, **caractérisé en ce qu'**il consiste à effectuer un écrêtage pour limiter l'excursion dudit signal de commande de changement de puissance (*PC(n)*) entre deux valeurs particulières.

**24.** Procédé selon la revendication 22 ou 23, **caractérisé en ce qu'**il consiste à assurer la conversion du signal de commande de puissance (*TC(n)*) exprimé en décibels en un signal de commande de puissance (*t(n)*) exprimé en valeurs réelles.

**25.** Procédé selon une des revendications 21 à 24, **caractérisé en ce qu'**il consiste à évaluer, d'une part, sur la base du signal de différence (*RC(n)*) reçu dudit récepteur (20), l'écart statique entre la puissance reçue par ledit récepteur et une puissance requise, et, d'autre part, sur la base du signal de différence (*RC(n)*) reçu dudit récepteur (20) et sur la base du signal de commande de changement de puissance (*PC(n-1)*) établi précédemment, un écart dynamique puis à effectuer une sommation pondérée ledit écart statique et ledit écart dynamique afin d'engendrer ledit signal de commande de changement de puissance (*PC(n)*) courant.

**26.** Procédé de contrôle selon la revendication 25, **caractérisé en ce qu'**au moins l'un desdits coefficients de pondération de la sommation pondérée effectuée par l'unité (121) sont prédéterminés ou déterminés selon les conditions de la transmission entre l'émetteur (10) et le récepteur (20).

**27.** Système de contrôle selon la revendication 25 ou 26, **caractérisé en ce qu'**au moins l'un desdits coefficients de pondération de la sommation pondérée effectuée par l'unité (121) sont déterminés en fonction de la vitesse du mobile par rapport à la station fixe.

**28.** Procédé selon une des revendication 25 à 27, **caractérisé en ce qu'**il consiste à évaluer un écart dynamique dû au canal aller entre l'émetteur (10) et le récepteur (20) et à évaluer un écart dynamique dû aux transmissions précédentes.

**29.** Procédé selon la revendication 28, **caractérisé en ce qu'**il consiste, pour évaluer l'écart dynamique dû au canal aller (*PC$_{DYN-C}$(n)*), à effectuer, sur la base du signal de différence *(RC(n))* reçu dudit récepteur (20) et sur la base du signal de commande de changement de puissance (*PC(n-1)*) établi précédemment, le calcul donné par la relation suivante :

$$PC_{DYN\_C}(n) = - g_x(z) \, [RC(n) - f(z) \, . \, QPC(n\text{-}x)]$$

exprimée selon la notation des transformées en *z*, *g(z)* étant une fonction en *z* de filtre prédictif, *f(z)* étant une fonction égale à la fonction *1/1(1-z$^{-1}$)* et x étant le retard total entre le moment où le signal émis par l'émetteur (10) est reçu par ledit récepteur (20) et le moment où le signal de différence (*RC(n)*) est reçu par l'émetteur (10).

**30.** Procédé selon la revendication 28 ou 29, **caractérisé en ce qu'**il consiste, pour évaluer l'écart dynamique dû aux transmissions précédentes (*PC$_{DYN-T}$(n)*), à effectuer, sur la base du signal de commande de changement de puissance (*PC(n-1)*) établi précédemment, le calcul donné par la relation suivante :

$$PC_{DYN\_T}(n) = -h(z) \, QPC(x\text{-}1)$$

où h est une fonction en *z* telle que

$$h(z) = \sum_{j=0}^{x-2} z^{-j} \quad x \geq 2 \quad .$$

**EP 1 017 185 B1**

**Patentansprüche**

1. System zur Regelung der Leistung, die von einem Sender (10) durch einen Empfänger (20) eines Telekommunikationssystems empfangen wird, wobei das System eine Einheit (22) in dem Empfänger (20) umfasst, um ein Signal (TC(n)) zu bilden, das für den Unterschied zwischen der durch den Empfänger (20) empfangenen Leistung und einer erforderlichen Leistung repräsentativ ist, und um das Signal an den Sender (10) zu übertragen, und eine Einheit (11) zum Steuern der durch den Sender (10) gesendeten Leistung umfasst, **dadurch gekennzeichnet, dass** der Sender (10) eine Verarbeitungseinheit (12), die auf der Basis des von dem Empfänger (20) empfangenen Differenzsignals (RC(n)) und auf der Basis mindestens eines anderen in dem Sender (20) gebildeten Signals ein Signal zur Steuerung der Leistungsänderung (PC(n)) erzeugt, und eine Integrationseinheit (13), die vorgesehen ist, um das Signal zur Steuerung der Leistungsänderung (PC(n)) zu integrieren, und um ein Leistungssteuersignal (T(n), t(n)) an die Leistungssteuerungseinheit (11) abzugeben, umfasst.

2. System zur Regelung nach Anspruch 1, **dadurch gekennzeichnet, dass** das oder eines der anderen in dem Sender (10) gebildeten Signale ein Signal zur Steuerung der Leistungsänderung (PC(n-1)) ist, das von der Verarbeitungseinheit (12) für einen Zeitpunkt vor dem derzeitigen Zeitpunkt gebildet wird.

3. System zur Regelung nach Anspruch 1 oder 2, **dadurch gekennzeichnet, dass** der Sender (10) eine Spitzenbegrenzungseinheit (15) umfasst, die vorgesehen ist, um die Verschiebung des Signals zur Steuerung der Leistungsänderung (PC(n)) zwischen zwei bestimmten Werten zu begrenzen und somit ein spitzenbegrenztes Signal zur Steuerung der Leistungsänderung (QPC(n)) zu bilden, das an die Integrationseinheit (13) abgegeben wird.

4. System zur Regelung nach einem der vorhergehenden Ansprüche, **dadurch gekennzeichnet, dass** es eine Umsetzungseinheit (14) umfasst, die vorgesehen ist, um die Umsetzung des in Dezibel ausgedrückten Leistungssteuersignals (TC(n)) in ein in reellen Werten ausgedrücktes Leistungssteuersignal (t(n)) zu gewährleisten.

5. System zur Regelung nach einem der vorhergehenden Ansprüche, **dadurch gekennzeichnet, dass** die Verarbeitungseinheit (12) besteht aus einer Einheit (122), die vorgesehen ist, um auf der Basis des von dem Empfänger (20) empfangenen Differenzsignals (RC(n)) die statische Abweichung zwischen der durch den Empfänger empfangenen Leistung und einer erforderlichen Leistung zu bewerten, zumindest aus einer Einheit (123, 124), die vorgesehen ist, um auf der Basis des von dem Empfänger (20) empfangenen Differenzsignals (RC(n)) und auf der Basis des Signals zur Steuerung der Leistungsänderung (PC(n-1)), das zuvor durch die Verarbeitungseinheit (12) gebildet wird, eine dynamische Abweichung zu bewerten, und aus einer Einheit für eine gewichtete Summierung (121), die vorgesehen ist, um eine gewichtete Summierung der durch die Einheiten (122, 123 und 124) abgegebenen Bewertungssignale auszuführen und um das derzeitige Signal zur Steuerung der Leistungsänderung (PC(n)) abzugeben.

6. System zur Regelung nach Anspruch 5, **dadurch gekennzeichnet, dass** mindestens einer der Gewichtungskoeffizienten der durch die Einheit (121) ausgeführten gewichteten Summierung nach den Übertragungsbedingungen zwischen dem Sender (10) und dem Empfänger (20) vorherbestimmt oder bestimmt wird.

7. System zur Regelung nach Anspruch 5 oder 6, **dadurch gekennzeichnet, dass** mindestens einer der Gewichtungskoeffizienten der durch die Einheit (121) ausgeführten gewichteten Summierung in Abhängigkeit von der Geschwindigkeit des Mobilgeräts im Verhältnis zur Feststation bestimmt wird.

8. System zur Regelung nach einem der Ansprüche 5 bis 7, **dadurch gekennzeichnet, dass** die Verarbeitungseinheit (12) aus einer Einheit (123) zum Bewerten einer von dem Vorwärtskanal herrührenden dynamischen Abweichung zwischen dem Sender (10) und dem Empfänger (20) und aus einer Einheit (124) zum Bewerten einer von den vorhergehenden Übertragungen herrührenden dynamischen Abweichung besteht.

9. System zur Regelung nach Anspruch 8, **dadurch gekennzeichnet, dass** die Einheit (123) zum Bewerten der von dem Vorwärtskanal herrührenden dynamischen Abweichung ($PC_{DYN-C}(n)$) auf der Basis des von dem Empfänger (20) empfangenen Differenzsignals (RC(n)) und auf der Basis des Signals zur Steuerung der Leistungsänderung (PC(n-1)), das zuvor durch die Verarbeitungseinheit (12) gebildet wird, die durch die folgende Beziehung gegebene Berechnung ausführt:

$$PC_{DYN\_C}(n) = -g_x(z) [RC(n) - f(z). QPC(n-x)],$$

die nach der Schreibweise der z-Transformierten ausgedrückt ist, wobei g(z) eine z-Funktion des Prädiktionsfilters, f(z) eine z-Funktion gleich $1/l(l-z^{-1})$ und x die Gesamtverzögerung zwischen dem Moment, in dem das durch den Sender (10) gesendete Signal durch den Empfänger (20) empfangen wird, und dem Moment, in dem das Differenzsignal (RC(n)) durch den Empfänger (20) empfangen wird, ist.

10. System zur Regelung nach Anspruch 8 oder 9, **dadurch gekennzeichnet, dass** die Einheit (124) zum Bewerten der von den vorhergehenden Übertragungen herrührenden dynamischen Abweichung ($PC_{DYN-T}(n)$) auf der Basis des Signals zur Steuerung der Leistungsänderung (PC(n-1)), das zuvor durch die Verarbeitungseinheit (12) gebildet wird, die durch die folgende Beziehung gegebene Berechnung ausführt:

$$PC_{DYN\_T}(n) = -h(z)\ QPC(x-1),$$

wobei h eine z-Funktion ist, wie etwa

$$h(z) = \sum_{j=0}^{x-2} z^{-j} \quad x \geq 2.$$

11. Sender eines Telekommunikationssystems von der Art, die eine Leistungssteuerungseinheit (11) umfasst, die seine Sendeleistung festlegt, um die Leistung zu regeln, die von ihm durch einen Empfänger (20), mit dem er in Verbindung steht, empfangen wird, wobei der Sender (10) dazu geeignet ist, von dem Empfänger (20) ein Differenzsignal zu empfangen, das normalerweise für den Unterschied zwischen der Leistung, die der Empfänger (20) von dem Sender (10) empfangen hat, und einer erforderlichen Leistung repräsentativ ist, **dadurch gekennzeichnet, dass** er eine Verarbeitungseinheit (12), die auf der Basis des von dem Empfänger (20) empfangenen Differenzsignals und auf der Basis mindestens eines anderen in dem Sender (10) gebildeten Signals ein Signal zur Steuerung der Leistungsänderung erzeugt, und eine Integrationseinheit (13), die bereitgestellt wird, um das Signal zur Steuerung der Leistungsänderung zu integrieren und um ein Leistungssteuersignal an die Leistungssteuerungseinheit (11) abzugeben, umfasst.

12. Sender nach Anspruch 11, **dadurch gekennzeichnet, dass** das oder eines der in dem Sender (10) gebildeten anderen Signale ein Signal zur Steuerung der Leistungsänderung (PC(n-1)) ist, das durch die Verarbeitungseinheit (12) für einen Zeitpunkt vor dem derzeitigen Zeitpunkt aufgebaut wird.

13. Sender nach Anspruch 11 oder 12, **dadurch gekennzeichnet, dass** er eine Spitzenbegrenzungseinheit (15) umfasst, die vorgesehen ist, um die Verschiebung des Signals zur Steuerung der Leistungsänderung (PC(n)) zwischen zwei bestimmten Werten zu begrenzen und so ein spitzenbegrenztes Signal zur Steuerung der Leistungsänderung (QPC(n)), das an die Integrationseinheit (13) abgegeben wird, zu bilden.

14. Sender nach einem der Ansprüche 11 bis 13, **dadurch gekennzeichnet, dass** er eine Umsetzungseinheit (14) umfasst, die vorgesehen ist, um die Umsetzung des in Dezibel ausgedrückten Leistungssteuersignals (TC(n)) in ein in reellen Werten ausgedrücktes Leistungssteuersignal (t(n)) zu gewährleisten.

15. Sender nach einem der Ansprüche 11 bis 14, **dadurch gekennzeichnet, dass** die Verarbeitungseinheit (12) besteht aus einer Einheit (122), die vorgesehen ist, um auf der Basis des von dem Empfänger (20) empfangenen Differenzsignals (RC(n)) die statische Abweichung zwischen der durch den Empfänger empfangenen Leistung und einer erforderlichen Leistung zu bewerten, aus zumindest einer Einheit (123, 124), die vorgesehen ist, um auf der Basis des von dem Empfänger (20) empfangenen Differenzsignals (RC(n)) und auf der Basis des Signals zur Steuerung der Leistungsänderung (PC(n-1)), das zuvor durch die Bewertungseinheit gebildet wird, eine dynamische Abweichung zu bewerten, und aus einer Einheit für eine gewichtete Summierung (121), die vorgesehen ist, um eine gewichtete Summierung der durch die Einheiten (122, 123 und 124) abgegebenen Bewertungssignale auszuführen und um das derzeitige Signal zur Steuerung der Leistungsänderung (PC(n)) abzugeben.

16. Sender nach Anspruch 15, **dadurch gekennzeichnet, dass** mindestens einer der Gewichtungskoeffizienten der gewichteten Summierung, die durch die Einheit (121) ausgeführt wird, nach den Übertragungsbedingungen zwischen dem Sender (10) und dem Empfänger (20) vorherbestimmt oder bestimmt wird.

17. Sender nach Anspruch 15 oder 16, **dadurch gekennzeichnet, dass** mindestens einer der Gewichtungskoeffizienten der gewichteten Summierung, die durch die Einheit (121) ausgeführt wird, in Abhängigkeit von der Geschwindigkeit des Mobilgeräts im Verhältnis zur Feststation bestimmt wird.

18. Sender nach Anspruch 15 bis 17, **dadurch gekennzeichnet, dass** die Verarbeitungseinheit (12) aus einer Einheit (123) zum Bewerten einer von dem Vorwärtskanal herrührenden dynamischen Abweichung zwischen dem Sender (10) und dem Empfänger (20) und aus einer Einheit (124) zum Bewerten einer von den vorhergehenden Übertragungen herrührenden dynamischen Abweichung besteht.

19. Sender nach Anspruch 18, **dadurch gekennzeichnet, dass** die Einheit (123) zum Bewerten der von dem Vorwärtskanal herrührenden dynamischen Abweichung ($PC_{DYN-C}(n)$) auf der Basis des von dem Empfänger (20) empfangenen Differenzsignals ($RC(n)$) und auf der Basis des Signals zur Steuerung der Leistungsänderung PC (n-1)), das zuvor durch die Verarbeitungseinheit (12) gebildet wird, die durch die folgende Beziehung gegebene Berechnung ausführt:

$$PC_{DYN-C}(n) = -gx(z) \, [RC(n) - f(z). \, QPC(n-x)],$$

die nach der Schreibweise der z-Transformierten ausgedrückt ist, wobei $g(z)$ eine z-Funktion des Prädiktionsfilters, $f(z)$ eine z-Funktion gleich der Funktion $1/I(I-z^{-1})$ und x die Gesamtverzögerung zwischen dem Moment, in dem das durch den Sender (10) gesendete Signal durch den Empfänger (20) empfangen wird, und dem Moment, in dem das Differenzsignal ($RC(n)$) durch den Empfänger (20) empfangen wird, ist.

20. Sender nach Anspruch 16 oder 17, **dadurch gekennzeichnet, dass** die Einheit (124) zum Bewerten der von den vorhergehenden Übertragungen herrührenden dynamischen Abweichung ($PC_{DYN-T}(n)$) auf der Basis des Signals zur Steuerung der Leistungsänderung ($PC(n-1)$), das zuvor durch die Verarbeitungseinheit (12) gebildet wird, die durch die folgende Beziehung gegebene Berechnung ausführt:

$$PC_{DYN-C}(n) = -gx(z) \, [RC(n) - f(z). \, QPC(n-x)],$$

wobei h eine z-Funktion ist, wie etwa

$$h(z) \;=\; \sum_{j=0}^{x-2} z^{-j} \quad x \geq 2.$$

21. Verfahren zur Regelung der Leistung, die durch einen Empfänger (20) empfangen und von einem Sender (10) eines Telekommunikationssystems übertragen wird, wobei das Verfahren darin besteht, ein Signal zu bilden, das für den Unterschied zwischen der durch den Empfänger (20) empfangenen Leistung und einer erforderlichen Leistung repräsentativ ist, und auf der Basis des Differenzsignals die durch den Sender (10) gesendete Leistung zu steuern, **dadurch gekennzeichnet, dass** es darin besteht, das Differenzsignal empfängerseitig (20) zu bilden und es zu dem Sender (10) zu übertragen und ein Signal, das für eine Änderung der durch den Sender (10) gesendeten Leistung repräsentativ ist, auf der Basis des Differenzsignals, das von dem Empfänger (20) durch den Sender (10) empfangen wird, und auf der Basis mindestens eines anderen Signals, das in dem Sender (10) gebildet wird, zu erzeugen, und das Leistungsänderungssignal zu integrieren, um die durch den Empfänger (20) gesendete Leistung zu steuern.

22. Verfahren zur Leistungsregelung nach Anspruch 21, **dadurch gekennzeichnet, dass** das oder eines der anderen in dem Sender (10) gebildeten Signale ein Signal zur Steuerung der Leistungsänderung ($PC(n-1)$) ist, das durch den Sender (10) für einen Zeitpunkt vor dem derzeitigen Zeitpunkt gebildet wird.

23. Verfahren nach Anspruch 21 oder 22, **dadurch gekennzeichnet, dass** es darin besteht, eine Spitzenbegrenzung auszuführen, um die Verschiebung des Signals zur Steuerung der Leistungsänderung ($PC(n)$) zwischen zwei bestimmten Werten zu begrenzen.

**24.** Verfahren nach Anspruch 22 oder 23, **dadurch gekennzeichnet, dass** es darin besteht die Umsetzung des in Dezibel ausgedrückten Leistungssteuersignals (TC(n)) in ein in reellen Werten ausgedrücktes Leistungssteuersignal (t(n)) zu gewährleisten.

**25.** Verfahren nach einem der Ansprüche 21 bis 24, **dadurch gekennzeichnet, dass** es darin besteht, einerseits auf der Basis des von dem Empfänger (20) empfangenen Differenzsignals (RC(n)) die statische Abweichung zwischen der durch den Empfänger empfangenen Leistung und einer erforderlichen Leistung zu bewerten, und andererseits, um auf der Basis des von dem Empfänger (20) empfangenen Differenzsignals (RC(n)) und auf der Basis des zuvor gebildeten Signals zur Steuerung der Leistungsänderung (PC(n-1)) eine dynamische Abweichung zu bewerten, und dann eine gewichtete Summierung der statischen Abweichung und der dynamischen Abweichung auszuführen, um das derzeitige Signal zur Steuerung der Leistungsänderung (PC(n)) zu erzeugen.

**26.** Verfahren zur Regelung nach Anspruch 25, **dadurch gekennzeichnet, dass** mindestens einer der Gewichtungskoeffizienten der durch die Einheit (121) ausgeführten gewichteten Summierung nach den Übertragungsbedingungen zwischen dem Sender (10) und dem Empfänger (20) vorherbestimmt oder bestimmt wird.

**27.** Verfahren zur Regelung nach Anspruch 25 oder 26, **dadurch gekennzeichnet, dass** mindestens einer der Gewichtungskoeffizienten der durch die Einheit (121) ausgeführten gewichteten Summierung in Abhängigkeit von der Geschwindigkeit des Mobilgeräts im Verhältnis zur Feststation bestimmt wird.

**28.** Verfahren nach einem der Ansprüche 25 bis 27, **dadurch gekennzeichnet, dass** es darin besteht, eine von dem Vorwärtskanal herrührende dynamische Abweichung zwischen dem Sender (10) und dem Empfänger (20) zu bewerten und eine von den vorhergehenden Übertragungen herrührende dynamische Abweichung zu bewerten.

**29.** Verfahren nach Anspruch 28, **dadurch gekennzeichnet, dass** es darin besteht, zum Bewerten der von dem Vorwärtskanal herrührenden dynamischen Abweichung ($PC_{DYN-C}$(n)) auf der Basis des von dem Empfänger (20) empfangenen Differenzsignals (RC(n)) und auf der Basis des zuvor aufgebauten Signals zur Steuerung der Leistungsänderung (PC(n-1)), die durch die folgende Beziehung gegebene Berechnung auszuführen:

$$PC_{DYN-C}(n) = -gx(z) [RC(n) - f(z). QPC(n-x)],$$

die nach der Schreibweise der z-Transformierten ausgedrückt ist, wobei g(z) eine z-Funktion des Prädiktionsfilters ist, f(z) eine z-Funktion gleich der Funktion $1/l(l-z^{-1})$ und x die Gesamtverzögerung zwischen dem Moment, in dem das durch den Sender (10) gesendete Signal durch den Empfänger (20) empfangen wird, und dem Moment, in dem das Differenzsignal (RC(n)) durch den Empfänger (20) empfangen wird, ist.

**30.** Verfahren nach Anspruch 28 oder 29, **dadurch gekennzeichnet, dass** es darin besteht, zum Bewerten der von den vorhergehenden Übertragungen herrührenden dynamischen Abweichung ($PC_{DYN\text{-}T}$(n)), auf der Basis des zuvor aufgebauten Signals zur Steuerung der Leistungsänderung (PC(n-1)), die durch die folgende Beziehung gegebene Berechnung auszuführen:

$$PC_{DYN\_T}(n) = -h(z) QPC(x-1),$$

wobei h eine z-Funktion ist, wie etwa

$$h(z) \;=\; \sum_{j=0}^{x-2} z^{-j} \quad x \geq 2.$$

**Claims**

**1.** System for controlling the power received from a transmitter (10) by a receiver (20) of a telecommunications system, said system including a unit (22) in said receiver (20) for producing a signal ($TC(n)$) representing the difference between the power received by said receiver (20) and a required power and for transmitting said signal to said transmitter (10), and a unit (11) for commanding the power transmitted by said transmitter (10), **characterised in that** said transmitter (10) includes a processing unit (12) which, on the basis of said difference signal ($RC(n)$) received from the receiver (20) and on the basis of at least one other signal produced in the transmitter (20), generates a power change command signal ($PC(n)$), and an integration unit (13) provided for integrating said power change command signal ($PC(n)$) and for delivering a power command signal ($T(n)$), $t(n)$) to said power command unit (11).

2. Control system according to claim 1 **characterised in that** said or one of the other signals produced in the transmitter (10) is a power change command signal ($PC(n-1)$) produced by the processing unit (12) for an instant preceding the current instant.

3. Control system according to claim 1 or 2 **characterised in that** said transmitter (10) has a clipping unit (15) provided to limit the excursion of said power change command signal ($PC(n)$) between two particular values and thus form a clipped power change command signal ($QPC(n)$) delivered to the integration unit (13).

4. Control system according to one of the preceding claims **characterised in that** it comprises a conversion unit (14) provided to effect conversion of the power command signal ($TC(n)$) expressed in decibels into a power command signal ($t(n)$) expressed in real values.

5. Control system according to one of the preceding claims **characterised in that** said processing unit (12) is composed of a unit (122) provided for evaluating, on the basis of the difference signal ($RC(n)$) received from said receiver (20), the static deviation between the power received by said receiver and a required power, at least one unit (123, 124) provided for evaluating, on the basis of the difference signal ($RC(n)$) received from said receiver (20) and on the basis of the power change command signal ($PC(n-1)$) previously produced by the processing unit (12), a dynamic deviation, and a weighted summation unit (121) provided for effecting a weighted summation of the evaluation signals delivered by said units (122, 123 and 124) and for delivering said current power change command signal ($PC(n)$).

6. Control system according to claim 5 **characterised in that** at least one of said weighting coefficients of the weighted summation effected by the unit (121) are predetermined or determined according to the conditions of the transmission between the transmitter (10) and the receiver (20).

7. Control system according to claim 5 or claim 6 **characterised in that** at least one of said weighting coefficients of the weighted summation effected by the unit (121) are determined in dependence on the speed of the mobile with respect to the fixed station.

8. Control system according to one of claims 5 to 7 **characterised in that** said processing unit (12) is composed of a unit (123) for evaluating a dynamic deviation due to the outbound channel between the transmitter (10) and the receiver (20), and a unit (124) for evaluating a dynamic deviation due to the previous transmissions.

9. Control system according to claim 8 **characterised in that** said unit (123) for evaluating the dynamic deviation due to the outbound channel ($PC_{DYN-C}(n)$) effects, on the basis of the difference signal ($RC(n)$) received from said receiver (20) and on the basis of the power change command signal ($PC(n-1)$) previously produced by the processing unit (12), the calculation given by the following relationship:

$$PC_{DYN\_C}(n) = -g_x(z)[RC(n) - f(z).QPC(n-x)]$$

expressed according to the $z$-transform notation, $g(z)$ being a predictive filter $z$-function, $f(z)$ being a $z$-function equal to $1/1(1-z^{-1})$ and $x$ being the total delay between the time at which the signal transmitted by the transmitter (10) is received by said receiver (20) and the time at which the difference signal ($RC(n)$) is received by the transmitter (10).

10. Control system according to claim 8 or 9 **characterised in that** said unit (124) for evaluating the dynamic deviation due to the previous transmissions ($PC_{DYN-T}(n)$) effects, on the basis of the power change command signal ($PC(n-1)$) previously produced by the processing unit (12), the calculation given by the following relationship:

$$PC_{DYN\_T}(n) = -h(z)QPC(x-1)$$

in which $h$ is a $z$-function such that

$$h(z) = \sum_{j=0}^{x-2} z^{-j} \qquad x \geq 2.$$

11. Transmitter of a telecommunications system of the type which comprises a power command unit (11) which fixes its transmission power in order to control the power received from it by a receiver (20) with which it is communicating, said transmitter (10) being capable of receiving from said receiver (20) a difference signal normally representing the difference between the power which said receiver (20) has received from said transmitter (10) and a required power, **characterised in that** it includes a processing unit (12) which, on the basis of said difference signal received from the receiver (20) and on the basis of at least one other signal produced in the transmitter (10), generates a power change command signal, and an integration unit (13) provided for integrating said power change command signal and for delivering a power command signal to said power command unit (11).

12. Transmitter according to claim 11 **characterised in that** said or one of the other signals produced in the transmitter (10) is a power change command signal ($PC(n-1)$) produced by the processing unit (12) for an instant preceding the current instant.

13. Transmitter according to claim 11 or 12 **characterised in that** it comprises a clipping unit (15) provided to limit the excursion of said power change command signal ($PC(n)$) between two particular values and thus form a clipped power change command signal ($QPC(n)$) delivered to the integration unit (13).

14. Transmitter according to one of claims 11 to 13 **characterised in that** it comprises a conversion unit (14) provided to effect conversion of the power command signal ($TC(n)$) expressed in decibels into a power command signal ($t(n)$) expressed in real values.

15. Transmitter according to one of claims 11 to 14 **characterised in that** said processing unit (12) is composed of a unit (122) provided for evaluating, on the basis of the difference signal ($RC(n)$) received from said receiver (20), the static deviation between the power received by said receiver and a required power, at least one unit (123, 124) provided for evaluating, on the basis of the difference signal ($RC(n)$) received from said receiver (20) and on the basis of the power change command signal ($PC(n-1)$) previously produced by the processing unit (12), a dynamic deviation, and a weighted summation unit (121) provided for effecting a weighted summation of the evaluation signals delivered by said units (122, 123 and 124) and for delivering said current power change command signal ($PC(n)$).

16. Transmitter according to claim 16 **characterised in that** at least one of said weighting coefficients of the weighted summation effected by the unit (121) are predetermined or determined according to the conditions of the transmission between the transmitter (10) and the receiver (20).

17. Transmitter according to claim 15 or 16 **characterised in that** at least one of said weighting coefficients of the weighted summation effected by the unit (121) are determined in dependence on the speed of the mobile with respect to the fixed station.

18. Transmitter according to claim 15 to 17 **characterised in that** said processing unit (12) is composed of a unit (123) for evaluating a dynamic deviation due to the outbound channel between the transmitter (10) and the receiver (20), and a unit (124) for evaluating a dynamic deviation due to the previous transmissions.

19. Transmitter according to claim 18 **characterised in that** said unit (123) for evaluating the dynamic deviation due to the outbound channel ($PC_{DYN-C}(n)$) effects, on the basis of the difference signal ($RC(n)$) received from said receiver (20) and on the basis of the power change command signal ($PC(n-1)$) previously produced by the processing unit (12), the calculation given by the following relationship:

$$PC_{DYN\_C}(n) = -g_x(z)[RC(n) - f(z),QPC(n-x)]$$

expressed according to the *z*-transform notation, *g(z)* being a predictive filter *z* -function, *f(z)* being a *z*-function equal to the function *1/1(1-z⁻¹)* and *x* being the total delay between the time at which the signal transmitted by the transmitter (10) is received by said receiver (20) and the time at which the difference signal (*RC(n)*) is received by the transmitter (10).

20. Transmitter according to claim 16 or 17 **characterised in that** said unit (124) for evaluating the dynamic deviation due to the previous transmissions (*PC_{DYN-T}(n)*) effects, on the basis of the power change command signal (*PC(n-1)*) previously produced by the processing unit (12), the calculation given by the following relationship:

$$PC_{DYN\_T}(n) = -h(z)QPC(x-1)$$

in which h is a *z*-function such that

$$h(z) \;=\; \sum_{j=0}^{x-2} z^{-j} \qquad x \,\geq\, 2.$$

21. Method of controlling the power received by a receiver (20) and transmitted from a transmitter (10) of a telecommunications system, said method consisting of producing a signal representing the difference between the power received by said receiver (20) and a required power, and commanding, on the basis of the difference signal, the power transmitted by said transmitter (10), **characterised in that** it consists of producing said receiver (20) side difference signal and transmitting it to said transmitter (10), and generating a signal representing a change in said power transmitted by said transmitter (10) on the basis of said difference signal received from the receiver (20) by said transmitter (10) and on the basis of at least one other signal produced in the transmitter (10) and integrating said power change signal in order to command said power transmitted by said receiver (20).

22. Power control method according to claim 21 **characterised in that** said or one of the other signals produced in the transmitter (10) is a power change command signal (*PC(n-1)*) produced by the transmitter (10) for an instant preceding the current instant.

23. Method according to claim 21 or 22 **characterised in that** it consists of performing clipping in order to limit the excursion of said power change command signal (*PC(n)*) between two particular values.

24. Method according to claim 22 or 23 **characterised in that** it consists of effecting conversion of the power command signal (*TC(n)*) expressed in decibels into a power command signal (*t(n)*) expressed in real values.

25. Method according to one of claims 21 to 24 **characterised in that** it consists of evaluating, on the one hand, on the basis of the difference signal (*RC(n)*) received from said receiver (20), the static deviation between the power received by said receiver and a required power, and, on the other hand, on the basis of the difference signal (*RC(n)*) received from said receiver (20) and on the basis of the power change command signal (*PC(n-1)*) produced previously, a dynamic deviation, and then effecting a weighted summation of said static deviation and said dynamic deviation in order to generate said current power change command signal (*PC(n)*).

26. Method according to claim 25 **characterised in that** at least one of said weighting coefficients of said weighted summation effected by the unit (121) are predetermined or determined according to the conditions of the transmission between the transmitter (10) and the receiver (20).

27. Method according to claim 25 or claim 26 **characterised in that** at least one of said weighting coefficients of said weighted summation effected by the unit (121) are determined in dependence on the speed of the mobile with respect to the fixed station.

28. Method according to one of claim 25 to 27 **characterised in that** it consists of evaluating a dynamic deviation due to the outbound channel between the transmitter (10) and the receiver (20) and evaluating a dynamic deviation due to the previous transmissions.

29. Method according to claim 28 **characterised in that** it consists, for evaluating the dynamic deviation due to the outbound channel ($PC_{DYN-C}(n)$), of effecting, on the basis of the difference signal ($RC(n)$) received from said receiver (20) and on the basis of the power change command signal ($PC(n-1)$) produced previously, the calculation given by the following relationship:

$$PC_{DYN\_C}(n) = -g_x(z)[RC(n) - f(z).QPC(n-x)]$$

   expressed according to the $z$-transform notation, $g(z)$ being a predictive filter $z$-function, $f(z)$ being a function equal to the function $1/1(1-z^{-1})$ and $x$ being the total delay between the time at which the signal transmitted by the transmitter (10) is received by said receiver (20) and the time at which the difference signal ($RC(n)$) is received by the transmitter (10).

30. Method according to claim 29 or 29 **characterised in that** it consists, for evaluating the dynamic deviation due to the previous transmissions ($PC_{DYN-T}(n)$), of effecting, on the basis of the power change command signal ($PC(n-1)$) produced previously, the calculation given by the following relationship:

$$PC_{DYN\_T}(n) = -h(z)QPC(x-1)$$

   in which h is a $z$-function such that

$$h(z) = \sum_{j=0}^{x-2} z^{-j} \qquad x \geq 2.$$

Fig. 1

Fig. 2

EP 1 017 185 B1

Fig. 3a

Fig. 3b

21

**Fig. 4**